(19) Europäisches Patentamt
European Patent Office
Office européen des brevets

(11) **EP 2 822 231 B1**

(12) **FASCICULE DE BREVET EUROPEEN**

(45) Date de publication et mention
de la délivrance du brevet:
**20.02.2019 Bulletin 2019/08**

(51) Int Cl.:
*H04L 12/413* (2006.01)　　*H04L 5/00* (2006.01)
*H04L 27/26* (2006.01)

(21) Numéro de dépôt: **14175311.1**

(22) Date de dépôt: **01.07.2014**

(54) **Procédé et système d'accès multiple avec multiplexage frequentiel de requêtes d'autorisation d'envoi de données**

Mehrfachzugangsverfahren und -system mit frequenziellem Multiplexen der Authorisierungsanfragen zur Datenübertragung

Multiple access method and system with frequency multiplexing of authorisation requests for sending data

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2013 FR 1356518**

(43) Date de publication de la demande:
**07.01.2015 Bulletin 2015/02**

(73) Titulaire: **Commissariat à l'Énergie Atomique et aux Énergies Alternatives**
**75015 Paris (FR)**

(72) Inventeurs:
• **Dore, Jean-Baptiste**
  **38950 Saint Martin Le Vinoux (FR)**
• **Mawlawi, Baher**
  **38000 Grenoble (FR)**

(74) Mandataire: **Brevalex**
**95, rue d'Amsterdam**
**75378 Paris Cedex 8 (FR)**

(56) Documents cités:
**US-A1- 2009 086 706　　US-A1- 2012 163 257**

• **ORFANOS G ET AL: "MC-CDMA based IEEE 802.11 wireless LAN", MODELING, ANALYSIS, AND SIMULATION OF COMPUTER AND TELECOMMUNICATIONS SYSTEMS, 2004. (MASCOTS 2004). PROCEEDINGS. THE IEEE COMPUTER SOCIETY' S 12TH ANNUAL INTERNATIONAL SYMPOSIUM ON VOLENDAM, THE NETHERLANDS, EU OCT. 4-8, 2004, PISCATAWAY, NJ, USA,IE, 4 octobre 2004 (2004-10-04), pages 400-405, XP010737177, DOI: 10.1109/MASCOT.2004.1348295 ISBN: 978-0-7695-2251-7**
• **JO WOON CHONG ET AL: "RawPEACH: Multiband CSMA/CA-based cognitive radio networks", JOURNAL OF COMMUNICATIONS AND NETWORKS, vol. 11, no. 2, 1 avril 2009 (2009-04-01), pages 175-186, XP055099559, ISSN: 1229-2370, DOI: 10.1109/JCN.2009.6391392**

**EP 2 822 231 B1**

**Description**

**DOMAINE TECHNIQUE**

Le domaine de l'invention est celui de l'accès multiple à une bande de fréquence d'un réseau de communication avec écoute de porteuse et évitement de collision.

**ÉTAT DE LA TECHNIQUE ANTÉRIEURE**

L'écoute de porteuse et l'évitement de collision connue sous l'acronyme CSMA/CA (« Carrier Sense Multiple Access / Collision Avoidance») est un protocole d'accès multiple qui peut être utilisé dans les systèmes de radiocommunications pour gérer l'allocation de la ressource radio.

Ce protocole est utilisé pour éviter des collisions entre de multiples utilisateurs (noeuds sources) souhaitant accéder en même temps à un point d'accès commun (noeud destinataire) sur la liaison montante.

Selon ce protocole, un noeud source souhaitant émettre des données écoute le canal de communication. Si le canal est occupé, une durée (exprimée en nombre de tranches horaires) d'un compteur d'attente (connu sous le nom de « backoff counter ») est choisie de manière aléatoire dans un intervalle [0, CW-1], où CW représente une fenêtre de contention. Le compteur d'attente est décrémenté de 1 à chaque fois que le canal est détecté comme étant disponible sur une durée DIFS (« Distributed Inter-Frame Space »). Le compteur d'attente est arrêté lorsque le canal est occupé, et reprend lorsque le canal est de nouveau disponible sur la durée DIFS au moins.

Lorsque le compteur d'attente atteint zéro, le noeud source transmet un message de requête d'autorisation d'envoi de données RTS (« Request To Send ») au noeud destinataire, et attend de recevoir un message d'autorisation d'envoi de données CTS (« Clear To Send ») du noeud destinataire avant d'émettre les données. A réception de toutes les données émises, et immédiatement après expiration d'une durée SIFS (« Short Inter-Frame Space»), le noeud destinataire envoie un message d'acquittement ACK (pour « ACKnowledgment »).

La fenêtre de contention CW est un entier compris dans un intervalle [$CW_{min}$, $CW_{max}$]. Cette fenêtre CW est initialement fixée à la valeur minimale $CW_{min}$. Chaque fois qu'un noeud source est impliqué dans une collision, il augmente son temps d'attente en doublant la fenêtre CW, jusqu'à la valeur maximale $CW_{max}$. A contrario, en cas de succès d'une transmission, le noeud source réduit la fenêtre CW à sa valeur minimale $CW_{min}$.

Un système CSMA/CA en fonctionnement mono-canal conventionnel présente l'avantage de ne nécessiter ni signalisation pour la requête de bande passante, ni allocation selon un accès planifié. En revanche, son efficacité est assez faible dans la mesure où ses performances se dégradent rapidement lorsque le nombre de noeuds sources augmente. Cette limitation peut être surmontée en ayant recours à un accès multiple par répartition sur différentes sous-bandes selon lequel plusieurs noeuds sources peuvent transmettre simultanément sur différentes sous-bandes, les noeuds sources connaissant l'état de disponibilité de chacune des sous-bandes à chaque instant. Cet accès multiple par répartition sur différentes sous-bandes exploite par exemple la méthode d'accès OFDMA (« Orthogonal Frequency Division Multiple Access ») selon laquelle la ressource spectrale (bande passante) est divisée en un ensemble de sous-porteuses orthogonales. Cet ensemble de sous-porteuses est lui-même divisé en sous-ensembles, chaque sous-ensemble de sous-porteuses constituant une sous-bande formant un canal de communication. Les noeuds sources s'affrontent ainsi pour l'accès à la ressource à la fois dans le temps et en fréquence.

Un système CSMA/CA en fonctionnement multi-canal est par exemple connu de l'article de J. W. Chong, Y. Sung, and D. K. Sung, intitulé "RawPEACH: Multiband CSMA/CA-Bbased Cognitive Radio Networks", Communications and Networks, Journal of, vol. 11, no. 2, pp. 175-186, 2009. Selon ce système, la bande passante allouée B est divisé en $N_{CH}$ sous-bandes, et chaque sous-bande est divisée en tranches horaires de durée $T_s$, les frontières entre tranches horaires étant synchronisées entre les sous-bandes. Ce système vise plus particulièrement à assurer un certain niveau de qualité de service pour certains utilisateurs de haute priorité (qualifiés d'utilisateurs primaires). Une canalisation est ainsi réservée à chaque utilisateur primaire qui consiste à lui fournir un canal sans compétition, orthogonal aux autres canaux, consistant en une séquence de sous-bandes sur lesquelles il peut transmettre ses données. En référence à la figure 2 de ce document, trois canaux sans compétition A, B et C sont définis. Le canal A saute entre les sous-bandes B1, B3 et B1, mais l'utilisateur auquel ce canal est assigné ne transmet que de t à t+$T_{f,p}$, de sorte que ce canal A est libéré à $T_{f,p}$. Le canal C saute entre les sous-bandes B3, B1 et B2, et l'utilisateur auquel ce canal est assigné transmet sur chacun des trois intervalles représentés - voir aussi US 2012/163257 A1 (KIM KEUN YOUNG [KR] ET AL) 28 juin 2012.

Si le nombre d'utilisateurs primaires est supérieur au nombre $N_{CH}$ de sous-bandes, l'orthogonalité entre les utilisateurs primaires ne peut être maintenue. Ainsi le nombre d'utilisateurs est au plus égal au nombre $N_{CH}$ de sous-bandes. Dès lors ce système nécessite un contrôle d'admission pour rejeter une requête d'un utilisateur visant à être traité comme utilisateur primaire lorsque tous les canaux primaires sont utilisés. L'utilisateur ainsi rejeté peut alors initier une session en tant qu'utilisateur secondaire de moindre priorité.

Dans des conditions de trafic faible ou moyen, il est probable que les ressources ne soient pas toutes entièrement occupées par des utilisateurs primaires. Ces ressources en temps et/ou en fréquence peuvent alors être utilisées pour servir des utilisateurs secondaires. Les auteurs de cet article proposent d'implémenter, pour les utilisateurs secondaires, le protocole CSMA/CA mono-bande conventionnel sur chacune des sous-bandes, en l'adaptant simplement pour que les compteurs d'attente des utilisateurs secondaires soient mis en pause lorsque toutes les sous-bandes sont occupées du fait de transmission par des utilisateurs primaires. Si au moins une des sous-bandes est détectée comme étant non occupée par un utilisateur primaire, les utilisateurs secondaires décrémentent chacun leur compteur d'attente de 1. Lorsqu'un compteur d'attente atteint zéro, l'utilisateur secondaire associé commence à transmettre ses données sur une sous-bande sélectionnée aléatoirement parmi l'au moins une sous-bande non occupée par un utilisateur primaire. Si plus d'un utilisateur secondaire transmet simultanément des données sur la même sous-bande, une collision intervient.

Un autre exemple de système CSMA/CA en fonctionnement multi-bandes est donné par la publication US 2009/0196273 A1 qui fournit une autre méthode de gestion du compteur d'attente. Dans cette publication, si l'une des sous-bandes est détectée comme étant disponible sur une durée correspondant à un créneau d'attente, un noeud source décrémente son compteur d'attente d'une valeur correspondant au nombre de sous-bandes disponibles. Lorsque le compteur d'attente d'un noeud source atteint zéro, le noeud source sélectionne aléatoirement l'une des sous-bandes disponibles et transmet ses données. Les frontières des créneaux d'attente sont synchronisées entre les différentes sous-bandes et un noeud source n'est autorisé à commencer l'attente ou à transmettre qu'au début de chaque créneau.

## EXPOSÉ DE L'INVENTION

L'invention a pour objectif de fournir une technique permettant d'améliorer les capacités de transmission d'un système CSMA/CA, et propose à cet effet un procédé d'accès multiple à une bande de fréquence d'un canal de communication d'un réseau de communication avec écoute de porteuse et évitement de collision, ladite bande de fréquence étant découpée en un ensemble de sous-bandes du canal de communication, le procédé comprenant, à un noeud source :

- la détection de la disponibilité du canal de communication,
- suite à la détection de la disponibilité du canal de communication, la modification d'une valeur d'un compteur d'attente, et
- lorsque la valeur du compteur d'attente atteint une valeur prédéterminée, la transmission à un noeud destinataire d'un message de requête d'autorisation d'envoi de données sur le canal de communication, ladite transmission étant réalisée sur une ou plusieurs sous-bandes (SBi, SB1, SB0) formant un sous-ensemble dudit ensemble de sous-bandes du canal de communication.

L'invention porte également sur un procédé d'accès multiple à une bande de fréquence d'un canal de communication d'un réseau de communication avec écoute de porteuse et évitement de collision, ladite bande de fréquence étant découpée en un ensemble de sous-bandes du canal de communication, comprenant à un noeud destinataire :

- la détection de messages simultanés de requête d'autorisation d'envoi de données sur le canal de communication transmis par une pluralité de noeuds source sur une pluralité de sous-bandes,
- la transmission d'un message d'autorisation d'envoi de données sur le canal de communication par au moins un noeud source parmi ladite pluralité de noeuds source.

L'invention s'étend également à un noeud destinataire ainsi qu'à un noeud source configurés pour la mise en oeuvre de ces procédés, ainsi qu'à un réseau de communication comprenant de tels noeuds. Elle s'étend enfin à un produit programme d'ordinateur comprenant des instructions de code pour l'exécution des étapes de ces procédés lorsque ledit programme est exécuté sur un ordinateur.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma illustrant les données transitant sur les différentes sous-bandes dans un premier mode de réalisation de l'invention, suite à des messages simultanés de requête d'autorisation d'envoi de données sur le canal de communication provenant de deux noeuds source ;
- la figure 2 est un schéma illustrant les données transitant sur les différentes sous-bandes suite à des messages simultanés de requête d'autorisation d'envoi de données sur le canal de communication provenant de trois noeuds source, dans un second mode de réalisation de l'invention réalisant une transmission consécutive des données de deux des noeuds sources ;

- la figure 3 représente le débit de saturation en fonction du nombre de noeuds sources dans un système mono-canal conventionnel ;
- les figures 4a et 4b représentent le débit de saturation en fonction du nombre de noeuds sources dans un système conforme au premier mode de réalisation de l'invention comprenant respectivement trois et cinq sous-bandes ;
- les figures 5a et 5b représentent le débit de saturation en fonction du nombre de noeuds sources dans un système conforme au second mode de réalisation de l'invention comprenant respectivement trois et cinq sous-bandes.

## EXPOSÉ DÉTAILLÉ DE MODES DE RÉALISATION PARTICULIERS

L'invention porte selon un premier aspect sur un procédé d'accès multiple à une bande de fréquence d'un canal de communication d'un réseau de communication, par exemple un réseau sans fil, avec écoute de porteuse et évitement de collision.

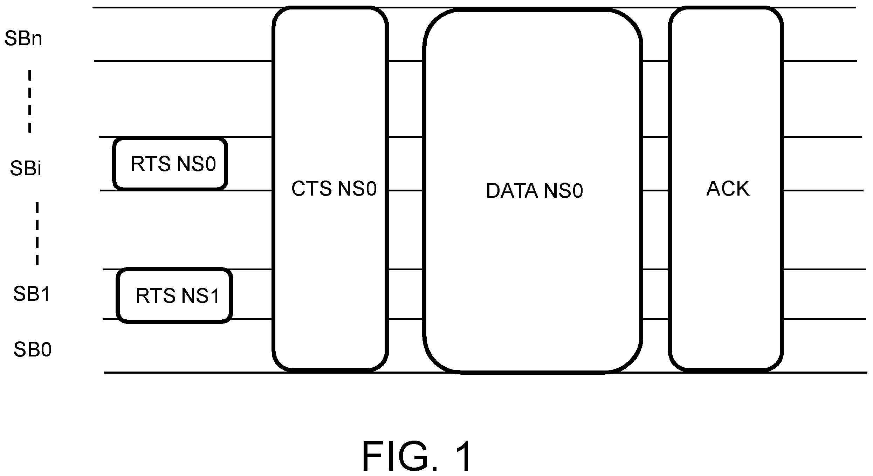

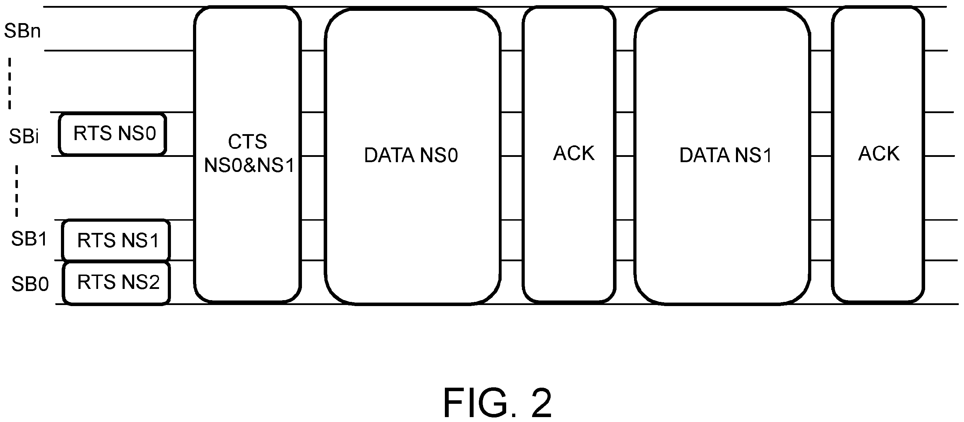

En référence aux figures 1 et 2, la bande de fréquence est découpée en un ensemble de sous-bandes SB0, SB1, ..., SBi, ..., SBn du canal de communication, lesdites sous-bandes étant utilisées comme cela sera détaillé par la suite pour la transmission depuis un noeud source NS0, NS1, NS2 vers un noeud destinataire d'un message de requête d'autorisation d'envoi de données sur le canal de communication « RTS NS0 », « RTS NS1 », « RTS NS2 ». Plus particulièrement, l'invention propose de réaliser un multiplexage en fréquence pour la transmission de messages de requête d'autorisation d'envoi de données sur le canal de communication, plusieurs noeuds sources pouvant transmettre simultanément de tels messages sur différentes sous-bandes.

Ce multiplexage en fréquence exploite par exemple la méthode d'accès OFDMA (« Orthogonal Frequency Division Multiple Access ») selon laquelle la ressource spectrale (bande passante) est divisée en un ensemble de sous-porteuses orthogonales. Cet ensemble de sous-porteuses est lui-même divisé en sous-ensembles, chaque sous-ensemble de sous-porteuses constituant une sous-bande.

Ce multiplexage en fréquence peut également exploiter d'autres types de modulation multi-porteuses, comme par exemple un système multi-porteuses à base de bancs de filtres FBMC (« Filter Bank based Multi-Carrier »).

Dans le cadre de l'invention, chaque noeud source dispose d'un compteur d'attente dont la valeur est modifiée (typiquement décrémentée de 1) lorsque le canal de communication est détecté comme étant disponible sur une durée donnée (durée DIFS dans le cadre du protocole CSMA/CA). Le canal de communication est disponible lorsqu'aucune transmission n'a lieu sur l'ensemble des sous-bandes SB0, SB1, ..., SBi, ..., SBn du canal de communication.

Lorsque le compteur d'attente d'un noeud source atteint une valeur prédéterminée (typiquement zéro), le noeud source transmet ses données après mise en oeuvre d'un mécanisme RTS/CTS modifié. Le noeud source transmet en effet un message de requête d'autorisation d'envoi de données sur le canal de communication (message de type RTS) sur une ou plusieurs sous-bandes formant un sous-ensemble dudit ensemble de sous-bandes du canal de communication (en d'autres termes, le message n'est pas transmis sur toutes les sous-bandes). Le message de requête d'autorisation d'envoi de données sur le canal de communication est transmis par un noeud source sur l'ensemble des sous-porteuses de la ou des sous-bandes formant ledit sous-ensemble.

A titre d'exemples, et toujours en référence aux figures 1 et 2, le noeud source NS0 transmet un tel message « RTS NS0 » sur la sous-bande SBi, le noeud source NS1 transmet un tel message « RTS NS1 » sur la sous-bande SB1 et le noeud source NS2 transmet un tel message « RTS NS2 » sur la sous-bande SB0.

Dans un mode de réalisation, la ou les sous-bandes pour la transmission par un noeud source du message de requête d'autorisation d'envoi de données sur le canal de communication sont imposées, par exemple via une liste de sous-bandes dont le noeud source peut prendre connaissance.

Dans un autre mode de réalisation, le noeud source procède à une sélection de la ou des sous-bandes pour la transmission du message de requête d'autorisation d'envoi de données sur le canal de communication. La sélection peut s'opérer, par exemple aléatoirement, parmi l'ensemble des sous-bandes du canal de communication ou encore dans un sous-ensemble de celui-ci imposé au noeud source.

Le noeud destinataire comprend une unité de détection configurée pour détecter des messages simultanés de requête d'autorisation d'envoi de données sur le canal de communication (messages simultanés « RTS NS0 » et « RTS NS1 » sur la figure 1 ; messages simultanés « RTS NS0 », « RTS NS1 » et « RTS NS2 » sur la figure 2), lesdits messages ayant été transmis par une pluralité de noeuds sources sur une pluralité de sous-bandes. Le noeud destinataire comporte par ailleurs une unité de transmission configurée pour transmettre sur le canal de communication (sur toutes les sous-porteuses de toutes les sous-bandes) un message d'autorisation d'envoi de données sur le canal de communication par au moins un noeud source parmi ladite pluralité de noeuds sources « CTS NS0 », « CTS NS0&NS1 ». Le ou les noeuds sources autorisés à transmettre sur le canal de communication procèdent ensuite à l'envoi de leur données « DATA NS0 », « DATA NS1 » sur le canal de communication, c'est-à-dire sur toutes les sous-porteuses de toutes les sous-bandes du canal de communication. Une fois une transmission de données achevée, et en cas de succès de celle-ci, le noeud destinataire envoie un message d'acquittement ACK.

Dans un mode de réalisation, le message d'autorisation d'envoi de données sur le canal de communication par au moins un noeud source parmi ladite pluralité de noeuds sources « CTS NS0 », « CTS NS0&NS1 » comporte un champ indicatif de la disponibilité de chacune des sous-bandes.

Selon l'invention, l'unité de détection du noeud destinataire est configurée pour écouter chacune des sous-bandes et détecter des messages simultanés de requête d'autorisation d'envoi de données provenant d'une pluralité de noeuds sources. Par messages simultanés, on entend des messages émis par des noeuds sources dans un même créneau temporel lorsque les noeuds sources et le noeud destinataire sont synchronisés, ou encore des messages émis par des noeuds sources dans une même fenêtre temporelle débutant à la disponibilité du canal de communication et prenant en considération la durée nécessaire de maintien de la disponibilité avant transmission (type DIFS) ainsi que le délai de propagation des différents noeuds sources.

En référence à la figure 1, le noeud destinataire peut ainsi détecter deux messages simultanés « RTS NS0 », « RTS NS1 » de requête d'autorisation d'envoi de données sur le canal de communication provenant de deux noeuds sources NS0, NS1. Dans le cadre d'un protocole CSMA/CA conventionnel, les deux messages auraient été simultanément transmis sur le canal de communication où ils seraient entrés en collision, de sorte qu'aucun des deux noeuds source n'auraient pu transmettre. Dans le cadre de l'invention, le risque de collision est fortement diminué puisque les messages sont chacun transmis sur une (ou plusieurs) sous-bande(s) qui peuvent être différentes. Et ce risque est bien entendu d'autant plus faible que le nombre de sous-bandes est important. La probabilité de collision de messages RTS simultanés étant réduite, la performance globale du système se trouve améliorée.

En revanche, en cas de messages simultanément transmis sur une même sous-bande, ces messages rentrent en collision, et ne peuvent dont être entendus par le noeud destinataire.

Dans un mode de réalisation, le noeud destinataire réalise une sélection aléatoire d'un ou plusieurs noeuds sources parmi la pluralité de noeuds sources ayant simultanément transmis sur une ou plusieurs sous-bandes un message de requête d'autorisation d'envoi de données sur le canal de communication.

Dans un autre mode de réalisation, le noeud destinataire réalise une sélection basée sur un niveau de priorité associé à chaque noeud source d'un ou plusieurs noeuds sources parmi la pluralité de noeuds sources ayant simultanément transmis sur une ou plusieurs sous-bandes un message requête d'autorisation d'envoi de données sur le canal de communication (en venant par exemple sélectionner le ou les noeuds sources de plus haute priorité, de manière à leur assurer un certain niveau de qualité de service).

En référence à la figure 1 illustrant un premier mode de réalisation de l'invention, un seul noeud source NS0 est sélectionné (aléatoirement ou du fait de son niveau de priorité) et un message d'autorisation d'envoi de données sur le canal de communication par le noeud source sélectionné « CTS NS0 » est transmis sur l'ensemble du canal de communication. Après réception du message d'autorisation d'envoi de données « CTS NS0 », le noeud source sélectionné NS0 transmet ses données « DATA NS0» sur l'ensemble du canal de communication puis attend un message d'acquittement de réception « ACK » transmis par le noeud destinataire également sur l'ensemble du canal de communication.

Selon un deuxième mode de réalisation de l'invention, l'envoi des données d'un ensemble de noeuds sources pouvant comprendre jusqu'à m noeuds sources est planifié. Si le nombre n de messages simultanés de requête d'autorisation d'envoi de données sur le canal de communication est inférieur au nombre m, alors les n noeuds sources sont sélectionnés. Si au contraire le nombre n de messages de requête d'autorisation d'envoi de données est supérieur à m, le noeud destinataire vient alors sélectionner m noeuds sources parmi n, soit aléatoirement, soit en fonction de leur niveau de priorité.

Le noeud destinataire transmet un message d'autorisation d'envoi de données sur le canal de communication par un ensemble de noeuds sources (ledit ensemble comprenant tout, lorsque n≤m, ou partie, lorsque n>m, des noeuds de ladite pluralité de noeuds sources) incluant un champ indicatif, pour chaque noeud source dudit ensemble, d'une transmission sur le canal de communication immédiate ou différée après écoute d'un ou plusieurs messages d'acquittement de réception transmis par le noeud destinataire sur le canal de communication. En référence à la figure 2, les noeuds sources NS0 et NS1 sont sélectionnés, et le message d'autorisation d'envoi de données sur le canal de communication par les noeuds sources sélectionnés « CTS NS0&NS1 » inclut un champ indiquant une transmission immédiate du premier noeud source NS0 et une transmission différée du second noeud source NS1 après écoute d'un message d'acquittement ACK de réception de données transmis par le noeud destinataire. Ainsi, après réception du message d'autorisation d'envoi de données « CTS NS0&NS1 », le noeud source NS0 transmet ses données « DATA NS0» sur l'ensemble du canal de communication puis attend un message d'acquittement de réception « ACK » transmis par le noeud destinataire sur l'ensemble du canal de communication. Après écoute du message d'acquittement, le noeud source NS1 transmet ses données « DATA NS1» puis attend un message d'acquittement de réception « ACK ».

Afin d'étudier les performances de l'invention, on calcule le débit de saturation correspondant au débit sous hypothèse que chaque noeud source a toujours un paquet à transmettre. Comme indiqué dans l'article de G. Bianchi, intitulé "IEEE 802.11-Saturation Throughput Analysis," IEEE Communications Letters, vol. 2, no. 12, pp. 318 - 320, dec.1998, le débit S correspond à la fraction de temps où un canal est utilisé pour transmettre avec succès des données de charge utile :

$$s = \frac{Ps.Ptr.L}{Ps.Ptr.Ts + Ptr.(1 - Ps).Tc + (1 - Ptr).Tid}$$

où Ptr correspondant à la probabilité d'avoir au moins une transmission sur le créneau temporel considéré,
Ps correspondant à la possibilité d'avoir une transmission sans échec,
L est la taille d'un paquet de charge utile moyen,
Ts correspond à la durée moyenne nécessaire pour transmettre un paquet de taille L,
Tc correspond à la durée moyenne d'une collision,
Tid correspond à la durée de la période de disponibilité.

On a Ts=RTS+SIFS+σ+CTS+SIFS+σ+H+L+SIFS+σ+ACK+DIFS+σ, et Tc=RTS+DIFS+ σ où H, L et ACK correspondent aux durées de transmission de l'entête du paquet, de la charge utile du paquet et du message d'acquittement, et où σ correspond au délai de propagation.

Les paramètres de protocole et de canal retenus sont ceux spécifiés pour la couche physique 802.11 FH PHY, tandis que la taille minimale $W_{min}$ de la fenêtre de contention est choisie constante et égale à 16.

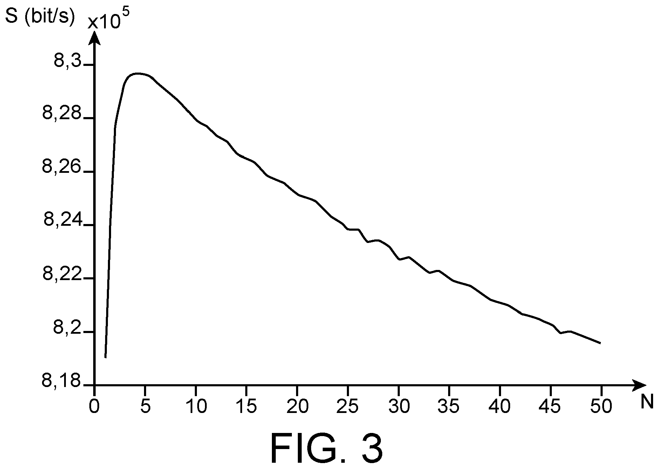

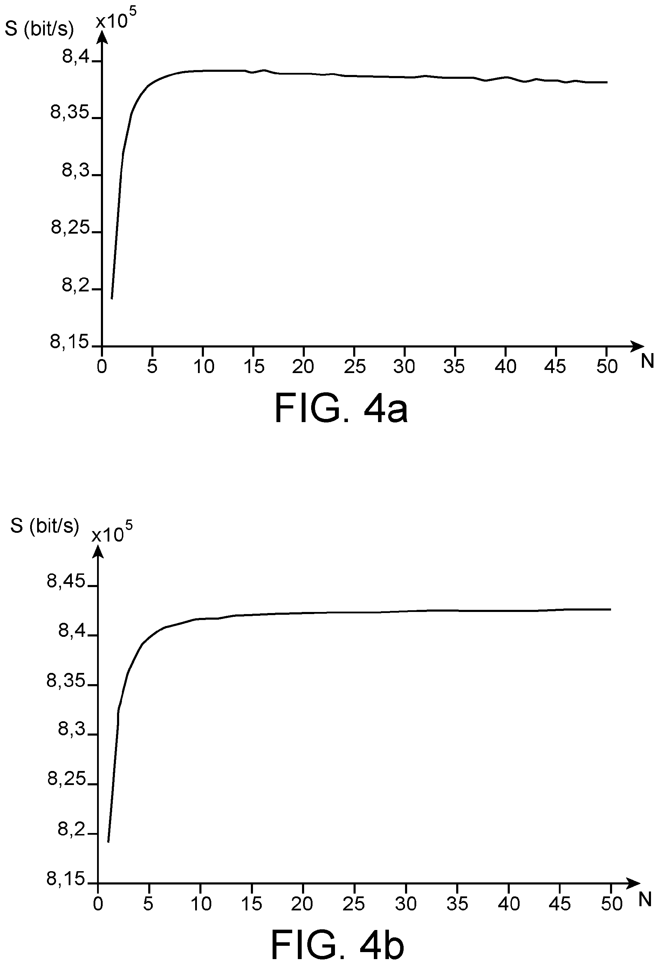

La figure 3 représente le débit de saturation S en fonction du nombre N de noeuds sources dans un système CSMA/CA conventionnel. Les figures 4a et 4b représentent le débit de saturation S en fonction du nombre N de noeuds sources dans un système conforme au premier mode de réalisation de l'invention illustré par la figure 1 comprenant respectivement trois et cinq sous-bandes.

On constate un débit de saturation dans le système conforme au premier mode de réalisation de l'invention nettement amélioré par rapport au système conventionnel, cette amélioration étant d'autant plus marquée que le nombre N de noeuds sources augmente. On constate par ailleurs qu'une augmentation du nombre de sous-bandes permet également d'améliorer le débit de saturation.

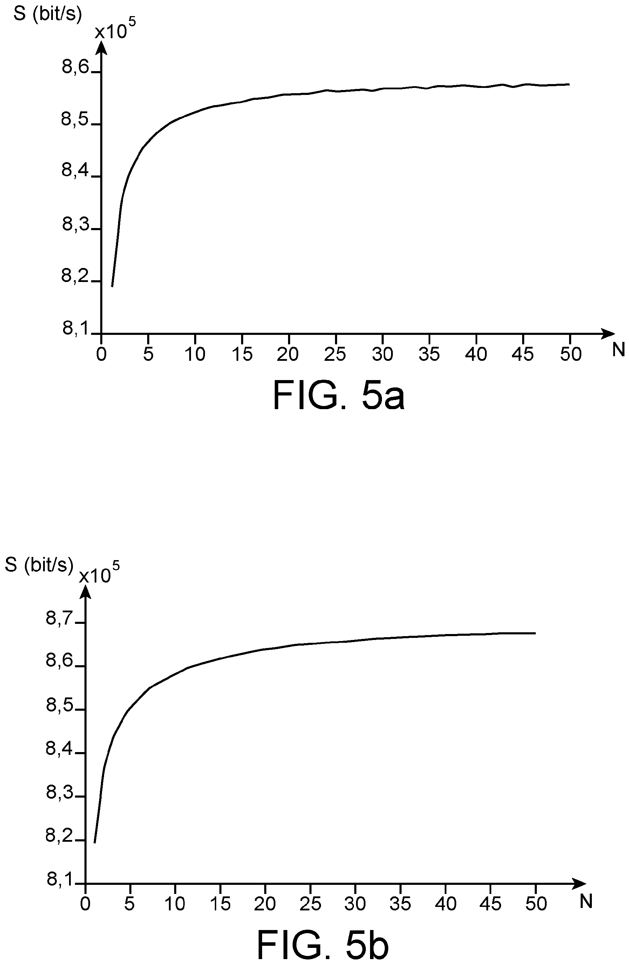

Les figures 5a et 5b représentent le débit de saturation S en fonction du nombre N de noeuds sources dans un système conforme au deuxième mode de réalisation de l'invention, illustré par la figure 2, comprenant respectivement trois et cinq sous-bandes, et dans lequel le nombre m de noeuds sources dont l'envoi peut être planifié est égal à 2. Ces figures montrent que la planification des transmissions permet d'augmenter encore plus le débit de saturation. Cela est dû à la réduction de la surcharge nécessaire pour transmettre des données de charge utile sur le canal de communication (un RTS plus un CTS étant suffisant pour transmettre deux données de charge utile). La latence se voit également diminuée puisque dans un même intervalle de temps, plus de noeuds sources peuvent être servis.

Ainsi, en fonction du nombre d'utilisateurs, il peut être avantageux de proposer un système fonctionnant en mode CSMA/CA conventionnel, conformément au premier mode de réalisation ou conformément au second mode de réalisation. Une modification dynamique du mode de fonctionnement peut être réalisée. De manière similaire, il peut être avantageux de modifier le nombre de sous-bandes en fonction du nombre d'utilisateurs, un nombre réduit d'utilisateurs ne nécessitant pas un nombre élevé de sous-bandes. Ou encore, en complément ou non de ces modifications, il peut être avantageux de modifier la valeur maximale $CW_{max}$ de la fenêtre de la fenêtre de contention du compteur d'attente, typiquement en la réduisant en présence de peu d'utilisateurs et en l'augmentant en présence de nombreux utilisateurs. La valeur minimale $CW_{min}$ de la fenêtre de contention peut similairement être modifiée.

L'invention n'est pas limitée au procédé tel que décrit précédemment, mais s'étend également à un noeud destinataire d'un réseau de communication à accès multiple à une bande de fréquence d'un canal de communication avec écoute de porteuse et évitement de collision, comprenant :

- une unité de détection configurée pour détecter des messages simultanés de requête d'autorisation d'envoi de données sur le canal de communication provenant d'une pluralité de noeuds source sur une pluralité de sous-bandes,
- une unité de transmission configurée pour transmettre sur le canal de communication un message d'autorisation d'envoi de données sur le canal de communication par au moins un noeud source parmi ladite pluralité de noeuds source.

L'invention porte également sur un noeud source d'un réseau de communication à accès multiple à une bande de fréquence d'un canal de communication avec écoute de porteuse et évitement de collision, ladite bande de fréquence étant découpée en un ensemble de sous-bandes du canal de communication, le noeud source comprenant une unité de détection configurée pour détecter la disponibilité du canal de communication et modifier une valeur d'un compteur d'attente suite à la détection de la disponibilité du canal de communication, caractérisé en ce qu'il comporte une unité de transmission configurée pour transmettre, lorsque la valeur du compteur d'attente atteint une valeur prédéterminée, à un noeud destinataire, sur une ou plusieurs sous-bandes formant un sous-ensemble dudit ensemble de sous-bandes du canal de communication, un message de requête d'autorisation d'envoi de données sur le canal de communication.

L'invention porte également sur un réseau de communication à accès multiple à une bande de fréquence d'un canal de communication avec écoute de porteuse et évitement de collision, comprenant un noeud destinataire et/ou un noeud source conforme à l'invention.

L'invention s'étend également à un produit programme d'ordinateur comprenant des instructions de code pour l'exécution, lorsque ledit programme est exécuté sur un ordinateur, des étapes de détection, de sélection et de transmission mises en oeuvre par les différentes unités du noeud destinataire. Et l'invention s'étend également à un produit programme d'ordinateur comprenant des instructions de code pour l'exécution, lorsque ledit programme est exécuté sur un ordinateur, des étapes de détection et de transmission mises en oeuvre par les différentes unités du noeud source.

## Revendications

1. Procédé d'accès multiple à une bande de fréquence d'un canal de communication d'un réseau de communication avec écoute de porteuse et évitement de collision, ladite bande de fréquence étant découpée en un ensemble de sous-bandes du canal de communication, chaque sous-bande comprenant un ensemble de sous-porteuses, le procédé comprenant à un noeud source :

   - la détection de la disponibilité du canal de communication,
   - suite à la détection de la disponibilité du canal de communication, la modification d'une valeur d'un compteur d'attente, et

   le procédé étant **caractérisé en ce qu'**il comprend également au noeud source, lorsque la valeur du compteur d'attente atteint une valeur prédéterminée, la transmission à un noeud destinataire d'un message de requête d'autorisation d'envoi de données sur toutes les sous-bandes du canal de communication (RTS NS0, RTS NS1, RTS NS2), ladite transmission étant réalisée sur une ou plusieurs sous-bandes (SBi, SB1, SB0) formant un sous-ensemble dudit ensemble de sous-bandes du canal de communication.

2. Procédé selon la revendication 1, comprenant une sélection par le noeud source de la ou des sous-bandes (SBi, SB1, SB0) pour la transmission du message de requête d'autorisation d'envoi de données sur le canal de communication (RTS NS0, RTS NS1, RTS NS2).

3. Procédé selon l'une des revendications 1 et 2, comprenant au noeud destinataire :

   - la détection de messages simultanés de requête d'autorisation d'envoi de données sur le canal de communication (RTS NS0, RTS NS1, RTS NS2) transmis par une pluralité de noeuds source (NSO, NS1, NS2) sur une pluralité de sous-bandes (SBi, SB1, SB0),
   - la transmission d'un message d'autorisation d'envoi de données sur le canal de communication par au moins un noeud source parmi ladite pluralité de noeuds source (CTS NS0, CTS NS0&NS1).

4. Procédé selon la revendication 3, comprenant à un noeud source, suite à la réception d'un message d'autorisation d'envoi de données sur le canal de communication par ledit noeud source au moins, la transmission de données (DATA NS0, DATA NS1) sur toutes les sous-bandes du canal de transmission.

5. Procédé selon la revendication 4, dans lequel le message d'autorisation d'envoi de données sur le canal de communication par ledit au moins un noeud source est transmis sur toutes les sous-bandes du canal de communication.

6. Procédé selon l'une des revendications 3 à 5, dans lequel le noeud destinataire réalise une sélection aléatoire dudit au moins un noeud source parmi ladite pluralité de noeuds source.

7. Procédé selon l'une des revendications 3 à 5, dans lequel le noeud destinataire réalise une sélection dudit au moins noeud source parmi ladite pluralité de noeuds source selon un niveau de priorité associé à chacun des noeuds source de ladite pluralité de noeuds source.

8. Procédé selon l'une des revendications 3 à 5, dans lequel le noeud destinataire transmet un message d'autorisation d'envoi de données par un ensemble de noeuds sources (CTS NS0&NS1), ledit ensemble de noeuds sources comprenant tout ou partie des noeuds de ladite pluralité de noeuds sources, ledit message incluant un champ indicatif, pour chaque noeud source dudit ensemble de noeuds sources, d'une transmission sur toutes les sous-bandes du canal de communication immédiate ou différée après écoute d'un ou plusieurs messages d'acquittement (ACK) de réception transmis par le noeud destinataire sur toutes les sous-bandes du canal de communication.

9. Procédé selon la revendication 8, dans lequel ledit ensemble de noeuds source comporte un nombre maximal de noeuds sources, et dans lequel le noeud destinataire sélectionne un ensemble de noeuds sources parmi ladite pluralité de noeuds sources lorsque le nombre de noeuds sources de ladite pluralité de noeuds sources est supérieur au nombre maximal.

10. Procédé selon l'une des revendications 1 à 9, dans lequel le message d'autorisation d'envoi de données sur le canal de communication par ledit au moins un noeud source sélectionné comprend un champ indicatif de la disponibilité des sous-bandes.

11. Procédé d'accès multiple à une bande de fréquence d'un canal de communication d'un réseau de communication avec écoute de porteuse et évitement de collision, ladite bande de fréquence étant découpée en un ensemble de sous-bandes du canal de communication, chaque sous-bande comprenant un ensemble de sous-porteuses, le procédé comprenant à un noeud destinataire :

- la détection de messages simultanés de requête d'autorisation d'envoi de données sur le canal de communication (RTS NS0, RTS NS1, RTS NS2) transmis par une pluralité de noeuds source (NSO, NS1, NS2), chacun sur une ou plusieurs sous-bandes (SBi, SB1, SB0) formant un sous-ensemble dudit ensemble de sous-bandes du canal de communication, suite à la détection de la disponibilité du canal de communication,
- la transmission d'un message d'autorisation d'envoi de données sur le canal de communication par au moins un noeud source parmi ladite pluralité de noeuds source (CTS NS0, CTS NS0&NS1).

12. Noeud destinataire d'un réseau de communication à accès multiple à une bande de fréquence d'un canal de communication avec écoute de porteuse et évitement de collision, comprenant :

- une unité de détection configurée pour détecter des messages simultanés de requête d'autorisation d'envoi de données sur le canal de communication (RTS NS0, RTS NS1, RTS NS2) transmis par une pluralité de noeuds sources (NSO, NS1, NS2) chacun sur une ou plusieurs sous-bandes (SBi, SB1, SB0) formant un sous-ensemble dudit ensemble de sous-bandes du canal de communication suite à la détection de la disponibilité du canal de communication,
- une unité de transmission configurée pour transmettre sur le canal de communication un message d'autorisation d'envoi de données sur le canal de communication par au moins un noeud source parmi ladite pluralité de noeuds source (CTS NS0, CTS NS0&NS1).

13. Noeud source d'un réseau de communication à accès multiple à une bande de fréquence d'un canal de communication avec écoute de porteuse et évitement de collision, ladite bande de fréquence étant découpée en un ensemble de sous-bandes du canal de communication, chaque sous-bande comprenant un ensemble de sous-porteuses, le noeud source comprenant une unité de détection configurée pour détecter la disponibilité du canal de communication et modifier une valeur d'un compteur d'attente suite à la détection de la disponibilité du canal de communication, **caractérisé en ce qu'**il comporte une unité de transmission configurée pour transmettre, lorsque la valeur du compteur d'attente atteint une valeur prédéterminée, à un noeud destinataire, sur une ou plusieurs sous-bandes (SBi, SB1, SB0) formant un sous-ensemble dudit ensemble de sous-bandes du canal de communication, un message de requête d'autorisation d'envoi de données sur toutes les sous-bandes du canal de communication (CTS NS0, CTS NS1, CTS NS2).

14. Réseau de communication à accès multiple à une bande de fréquence d'un canal de communication avec écoute de porteuse et évitement de collision, comprenant un noeud destinataire selon la revendication 12 et/ou un noeud source selon la revendication 13.

15. Produit programme d'ordinateur comprenant des instructions de code pour l'exécution des étapes du procédé selon l'une des revendications 1 ou 11 lorsque ledit programme est exécuté sur un ordinateur.

**Patentansprüche**

1. Verfahren zum Mehrfachzugang zu einem Frequenzband eines Kommunikationskanals eines Kommunikationsnetzes mit Trägerhören und Kollisionsvermeidung, wobei das Frequenzband in eine Gruppe von Unterbändern des Kommunikationskanals aufgeteilt ist, wobei jedes Unterband eine Gruppe von Unterträgern umfasst, wobei das Verfahren bei einem Quellenknoten Folgendes umfasst:

- Erfassen der Verfügbarkeit des Kommunikationskanals,
- im Anschluss an die Erfassung der Verfügbarkeit des Kommunikationskanals, Modifizieren eines Werts eines Wartezählers, und

wobei das Verfahren **dadurch gekennzeichnet ist, dass** es ferner beim Quellenknoten Folgendes umfasst:

- wenn der Wert des Wartezählers einen vorbestimmten Wert erreicht, Übertragen, an einen Zielknoten, einer Nachricht zur Autorisierungsanfrage zur Datenübermittlung auf allen Unterbändern des Kommunikationskanals (RTS NS0, RTS NS1, RTS NS2),

wobei die Übertragung auf ein oder mehr Unterbändern (SBi, SB1, SB0) realisiert wird, die eine Untergruppe der Gruppe von Unterbändern des Kommunikationskanals bilden.

2. Verfahren nach Anspruch 1, umfassend eine Auswahl, durch den Quellenknoten, des oder der Unterbänder (SBi, SB1, SB0) für die Übertragung der Nachricht zur Autorisierungsanfrage zur Datenübermittlung auf dem Kommunikationskanal (RTS NS0, RTS NS1, RTS NS2).

3. Verfahren nach einem der Ansprüche 1 und 2, umfassend beim Zielknoten:

- Erfassen von gleichzeitigen Nachrichten zur Autorisierungsanfrage zur Datenübermittlung auf dem Kommunikationskanal (RTS NS0, RTS NS1, RTS NS2), die durch eine Mehrzahl von Quellenknoten (NSO, NS1, NS2) auf einer Mehrzahl von Unterbändern (SBi, SB1, SB0) übertragen werden,
- Übertragen einer Nachricht zur Autorisierung zur Datenübermittlung auf dem Kommunikationskanal durch wenigstens einen Quellenknoten aus der Mehrzahl von Quellenknoten (CTS NS0, CTS NSO&NS1).

4. Verfahren nach Anspruch 3, umfassend bei einem Quellenknoten im Anschluss an den Empfang einer Nachricht zur Autorisierung zur Datenübermittlung auf dem Kommunikationskanal wenigstens durch den Quellenknoten die Übertragung von Daten (DATA NS0, DATA NS1) auf allen Unterbändern des Übertragungskanals.

5. Verfahren nach Anspruch 4, bei dem die Nachricht zur Autorisierung zur Datenübermittlung auf dem Kommunikationskanal durch den wenigstens einen Quellenknoten auf allen Unterbändern des Kommunikationskanals übertragen wird.

6. Verfahren nach einem der Ansprüche 3 bis 5, bei dem der Zielknoten eine zufällige Auswahl des wenigstens einen Quellenknotens aus der Mehrzahl von Quellenknoten durchführt.

7. Verfahren nach einem der Ansprüche 3 bis 5, bei dem der Zielknoten eine Auswahl des wenigstens einen Quellenknotens aus der Mehrzahl von Quellenknoten gemäß einem Prioritätsniveau ausführt, das jedem der Quellenknoten aus der Mehrzahl von Quellenknoten zugeordnet ist.

8. Verfahren nach einem der Ansprüche 3 bis 5, bei dem der Zielknoten eine Nachricht zur Autorisierung zur Datenübermittlung durch eine Gruppe von Quellenknoten (CTS NSO&NS1) überträgt, wobei die Gruppe von Quellenknoten alle oder einen Teil der Knoten von der Mehrzahl von Quellenknoten umfasst, wobei die Nachricht ein Feld enthält, das für jeden Quellenknoten von der Gruppe von Quellenknoten eine sofortige oder verzögerte Übertragung auf allen Unterbändern des Kommunikationskanals nach dem Hören von einer oder mehreren Empfangsbestätigungsnachrichten (ACK) angibt, übertragen durch den Zielknoten auf allen Unterbändern des Kommunikationskanals.

9. Verfahren nach Anspruch 8, bei dem die Gruppe von Quellenknoten eine maximale Zahl von Quellenknoten umfasst, und bei dem der Zielknoten eine Gruppe von Quellenknoten aus der Mehrzahl von Quellenknoten auswählt, wenn die Zahl von Quellenknoten aus der Mehrzahl von Quellenknoten größer als die maximale Zahl ist.

10. Verfahren nach einem der Ansprüche 1 bis 9, bei dem die Nachricht zur Autorisierung zur Datenübermittlung auf dem Kommunikationskanal durch den wenigstens einen ausgewählten Quellenknoten ein Feld umfasst, das die Verfügbarkeit der Unterbänder angibt.

11. Verfahren zum Mehrfachzugang zu einem Frequenzband eines Kommunikationskanals eines Kommunikationsnetzes mit Trägerhören und Kollisionsvermeidung, wobei das Frequenzband in eine Gruppe von Unterbändern des Kommunikationskanals unterteilt ist, wobei jedes Unterband eine Gruppe von Unterträgern umfasst, wobei das Verfahren bei einem Zielknoten Folgendes umfasst:

- Erfassen von gleichzeitigen Nachrichten zur Autorisierungsanfrage zur Datenübermittlung auf dem Kommunikationskanal (RTS NS0, RTS NS1, RTS NS2), übertragen durch eine Mehrzahl von Quellenknoten (NSO, NS1, NS2) jeweils auf einem oder mehreren Unterbändern (SBi, SB1, SBO), die eine Untergruppe der Gruppe von Unterbändern des Kommunikationskanals bilden, im Anschluss an die Erfassung der Verfügbarkeit des Kommunikationskanals,
- Übertragen einer Nachricht zur Autorisierung zur Datenübermittlung auf dem Kommunikationskanal durch wenigstens einen Quellenknoten aus der Mehrzahl von Quellenknoten (CTS NS0, CTS NSO&NS1).

12. Zielknoten eines Kommunikationsnetzes mit Mehrfachzugang zu einem Frequenzband eines Kommunikationskanals mit Trägerhören und Kollisionsvermeidung, umfassend:

- eine Erfassungseinheit, die dazu ausgelegt ist, gleichzeitige Nachrichten zur Autorisierungsanfrage zur Datenübermittlung auf dem Kommunikationskanal (RTS NS0, RTS NS1, RTS NS2) zu erfassen, übertragen durch eine Mehrzahl von Quellenknoten (NSO, NS1, NS2) jeweils auf einem oder mehreren Unterbändern (SBi, SB1, SBO), die eine Untergruppe der Gruppe von Unterbändern des Kommunikationskanals bilden, im Anschluss an die Erfassung der Verfügbarkeit des Kommunikationskanals,
- eine Übertragungseinheit, die dazu ausgelegt ist, auf dem Kommunikationskanal eine Nachricht zur Autorisierung zur Datenübermittlung auf dem Kommunikationskanal durch wenigstens einen Quellenknoten aus der Mehrzahl von Quellenknoten (CTS NS0, CTS NSO&NS1) zu übertragen.

13. Quellenknoten eines Kommunikationsnetzes mit Mehrfachzugang zu einem Frequenzband eines Kommunikationskanals mit Trägerhören und Kollisionsvermeidung, wobei das Frequenzband in eine Gruppe von Unterbändern des Kommunikationskanals unterteilt ist, wobei jedes Unterband eine Gruppe von Unterträgern umfasst, wobei der Quellenknoten eine Erfassungseinheit umfasst, die dazu ausgelegt ist, die Verfügbarkeit des Kommunikationskanals zu erfassen und einen Wert eines Wartezählers im Anschluss an die Erfassung der Verfügbarkeit des Kommunikationskanals zu modifizieren, **dadurch gekennzeichnet, dass** er eine Übertragungseinheit umfasst, die dazu ausgelegt ist, dann, wenn der Wert des Wartezählers einen vorbestimmten Wert erreicht, an einen Zielknoten auf ein oder mehreren Unterbändern (SBi, SB1, SBO), die eine Untergruppe der Gruppe von Unterbändern des Kommunikationskanals bilden, eine Nachricht zur Autorisierungsanfrage zur Datenübermittlung auf allen Unterbändern des Kommunikationskanals (CTS NS0, CTS NS1, CTS NS2) zu übertragen.

14. Kommunikationsnetz mit Mehrfachzugang zu einem Frequenzband eines Kommunikationskanals mit Trägerhören und Kollisionsvermeidung, umfassend einen Zielknoten nach Anspruch 12 und/oder einen Quellenknoten nach Anspruch 13.

15. Computerprogrammprodukt, umfassend Codebefehle für die Ausführung der Schritte des Verfahrens nach einem der Ansprüche 1 bis 11, wenn das Programm auf einem Computer ausgeführt wird.

**Claims**

1. A method for multiple access to a frequency band of a communication channel of a communication network with carrier sense and collision avoidance, said frequency band being divided into a set of sub-bands of the communication channel, each sub-band comprising a set of sub-carriers, the method comprising at a source node:

- detection of the availability of the communication channel;
- subsequent to detection of the availability of the communication channel, modification of a value of a backoff counter; and

the method being **characterized in that** it also comprises at the source node, when the value of the backoff counter reaches a predetermined value, the transmission to a destination node of a message requesting authorisation to send data on all the sub-bands the communication channel (RTS NS0, RTS NS1, RTS NS2), said transmission being performed on one or more sub-bands (SBi, SB1, SB0) forming a sub-set of said set of sub-bands of the communication channel.

2. The method according to claim 1, comprising the selecting by the source node of the sub-band(s) (SBi, SB1, SB0) for transmission of the message requesting authorisation to send data on the communication channel (RTS NS0, RTS NS1, RTS NS2).

3. The method according to one of claims 1 and 2, comprising at the destination node:

   - detection of simultaneous messages requesting authorisation to send data on the communications channel (RTS NS0, RTS NS1, RTS NS2) transmitted by a plurality of source nodes (NSO, NS1, NS2) over a plurality of sub-bands (SBi, SB1, SB0),
   - transmission of a message authorising the sending of data on the communication channel by at least one source node from among the said plurality of source nodes (CTS NS0, CTS NS0&NS1).

4. The method according to claim 3, which comprises at a source node, further to receipt of a message authorising the sending of data on the communication channel by the said source node, the transmission of data (DATA NS0, DATA NS1) over all the sub-bands of the transmission channel.

5. The method according to claim 4, wherein the message authorising the sending of data on the communication channel by the said at least one source node is transmitted over all the sub-bands of the communication channel.

6. The method according to one of claims 3 to 5, wherein the destination node makes a random selection of said at least one source node from among the plurality of source nodes.

7. The method according to one of claims 3 to 5, wherein the destination node makes a selection of said at least one source node among the said plurality of source nodes in accordance with a priority level associated with each of the source nodes of the said plurality of source nodes.

8. The method according to one of claims 3 to 5, wherein the destination node transmits a message authorising the sending of data by a set of source nodes (CTS NS0&NS1), the said set of source nodes comprising all or part of the nodes of the said plurality of source nodes, the said message including a field which, for each source node of said set of source nodes, indicates immediate or deferred transmission over all the sub-bands of the communication channel after listening to one or more acknowledgement of receipt messages (ACK) transmitted by the destination node over all the sub-bands of the communication channel.

9. The method according to claim 8, wherein the said set of source nodes comprises a maximum number of source nodes, and wherein the destination node selects a set of source nodes from among the said plurality of source nodes when the number of source nodes of the said plurality of source nodes is higher than the maximum number.

10. The method according to one of claims 1 to 9, wherein the message authorising the sending of data on the communication channel by the said at least one selected source node comprises a field indicating the availability of the sub-bands.

11. A method for multiple access to a frequency band of a communication channel of a communication network with carrier sense and collision avoidance, the said frequency band being divided into a set of sub-bands of the communication channel, each sub-band comprising a set of sub-carriers, the method comprising at a destination node:

   - the detection of simultaneous messages requesting authorisation to send data on the communication channel (RTS NS0, RTS NS1, RTS NS2) transmitted by a plurality of source nodes (NSO, NS1, NS2), each on one or more sub-bands (SBi, SB1, SB0) forming a sub-set of said set of sub-bands of the communication channel, subsequent to detection of the availability of the communication channel,
   - transmission of a message authorising the sending of data on the communication channel by at least one source node among the said plurality of source nodes (CTS NS0, CTS NS0&NS1).

12. A destination node of a communication network with multiple access to a frequency band of a communication channel with carrier sense and collision avoidance, comprising:

- a detection unit configured to detect simultaneous messages requesting authorising to send data on the communication channel (RTS NS0, RTS NS1, RTS NS2) transmitted by a plurality of source nodes (NSO, NS1, NS2) each on one or more sub-bands (SBi, SB1, SB0) forming a sub-set of said set of sub-bands of the communication channel subsequent to detection of the availability of the communication channel,
- a transmission unit configured to transmit a message on the communication channel authorising the sending of data on the communication channel by at least one source node among the said plurality of source nodes (CTS NS0, CTS NS0&NS1).

13. A source node of a communication network with multiple access to a frequency band of a communication channel with carrier sense and collision avoidance, the said frequency band being divided into a set of sub-bands of the communication channel, each sub-band comprising a set of sub-carriers, the source node comprising a detection unit configured to detect the availability of the communication channel and to modify a value of a backoff counter further to detection of the availability of the communication channel, **characterized in that** it comprises a transmission unit configured so that when the value of the backoff counter reaches a predetermined value it transmits a message to the destination node, over one or more sub-bands (SBi, SB1, SB0) forming a sub-set of said set of sub-bands of the communication channel, requesting authorisation to send data on all the sub-bands of the communication channel (CTS NS0, CTS NS1, CTS NS2).

14. A communication network with multiple access to a frequency band of a communication channel with carrier sense and collision avoidance, comprising a destination node according to claim 12 and/or a source node according to claim 13.

15. A computer program product comprising code instructions for implementing the steps of the method according to one of claims 1 or 11 or when the said program is run on a computer.

FIG. 1

FIG. 2

EP 2 822 231 B1

FIG. 3

FIG. 4a

FIG. 4b

FIG. 5a

FIG. 5b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012163257 A1, KIM KEUN YOUNG

- US 20090196273 A1

**Littérature non-brevet citée dans la description**

- **DE J. W. CHONG ; Y. SUNG ; D. K. SUNG.** RawPEACH: Multiband CSMA/CA-Bbased Cognitive Radio Networks. *Communications and Networks, Journal of,* 2009, vol. 11 (2), 175-186

- **DE G. BIANCHI.** IEEE 802.11-Saturation Throughput Analysis. *IEEE Communications Letters,* Décembre 1998, vol. 2 (12), 318-320